# EUROPEAN PATENT SPECIFICATION

(11) **EP 3 550 872 B1**
(45) Date of publication and mention of the grant of the patent: **30.03.2022**
(21) Application number: 18165922.8
(22) Date of filing: 05.04.2018
(51) Int. Cl.: H04W 24/06, H04W 16/22

(54) **TEST DEVICE, TEST SYSTEM, TEST INFRASTRUCTURE AND METHOD FOR PERFORMING TESTS ON A DEVICE UNDER TEST**
TESTVORRICHTUNG, -SYSTEM, -INFRASTRUKTUR UND VERFAHREN ZUM TESTEN EINER ZU TESTENDEN VORRICHTUNG
DISPOSITIF D'ESSAI, SYSTÈME D'ESSAI, INFRASTRUCTURE D'ESSAI ET PROCÉDÉ PERMETTANT DE TESTER UN DISPOSITIF À LE ESSAI

(43) Date of publication of application: 09.10.2019
(73) Proprietor: Rohde & Schwarz GmbH & Co. KG, 81671 München (DE)
(72) Inventor: Sterzbach, Bernhard, 81541 München (DE)
(74) Representative: Prinz & Partner mbB

(56) References cited:
- EP-A1- 3 276 907
- US-A1- 2006 019 679
- US-A1- 2010 190 451
- US-A1- 2017 013 121
- US-A1- 2018 049 050

## Description

The invention relates to a test device for performing tests on a device under test, a test system with a test device and a device under test, a test infrastructure and a method for performing tests on a device under test.

Mobile network devices, e.g. end user equipment (UE) like smartphones and sensors for the internet of things (loT), have to be tested extensively. The tests are necessary because network environments all over the world differ from one another, mainly because different mobile network operators (MNO), short "operators" in this disclosure, use different settings for their network environment, but also due to environmental factors like echoes of hills and buildings or density of base stations.

Thus, in order to perform the tests, the device to be tested (device under test) had to be tested at the different geographic locations all over the world. This approach is very expensive and time consuming as it involves a lot of travelling.

US 2018/049050 A1 discloses a test system comprising: a network access point simulation component, a local control component. The network access point simulation component is configured to simulate communication network access point operations comprising test interactions with user equipment. The local control component is configured to direct the network access point simulation component and to control the test interactions with the user equipment. The local control component comprises a test executive operable to direct simulation of communication network operations and the test interactions in accordance with information received from the remote control components.

US 2006/019679 A1 discloses a system and method for estimating the position of wireless devices within a wireless communication network combines measured RF channel characteristics for the wireless device with one or more predicted performance lookup tables, each of which correlates an RF channel characteristic to some higher order network performance metric and/or a position within an environmental model. Measured RF channel characteristics for wireless devices are compared against the performance lookup tables to determine the sent of lookup tables that most closely match the measured RF channel characteristics.

The positions within the environmental model corresponding to the selected set of matching lookup tables are identified as possible locations for the wireless device; The performance lookup tables are uniquely constructed by site-specific location, technology, wireless standard, and equipment types, and/or the current operating state of the communications network.

US 2017/013121 A1 discloses a testing method and system for mobile communication devices, the method comprising transmitting, by a testing front end module, a testing profile; activating the testing profile on the mobile communication device; setting, by a testing controller, the configuration of the mobile communication device to a testing mode according to the information of the activated testing profile, wherein the testing profiles enable the mobile communication device to be tested under virtual operation conditions and to compare the observed behavior with a predefined operational profile.

EP 3 276 907 A1 discloses a method and test apparatus for testing a security of communication of a device under test, wherein the test apparatus comprises an RF unit having an RF interface adapted to receive from the dive under test an RF signal carrying Internet Protocol data including at least one IP address.

US 2010/0190451 A1 shows a method for testing a device under test in a mobile-radio network environment simulated in a laboratory. The mobile-radio network environment is simulated based on signals measured in a real mobile-radio network environment beforehand.

It is the object of the invention to provide a test device, a test system, a test infrastructure and a method for performing tests on a device under test that significantly reduces the costs and time involved for field-testing a device under test.

For this purpose, a test device for performing tests on a device under test according to claim 1 is provided.

The device under test may connect to the network test environment and test may then be performed.

Further, a test system is provided with a test device according to the invention and a device under test.

Furthermore, a test infrastructure is provided comprising a test device according to the invention or a test system according to the invention, further comprising a server connected to the test device, wherein the server has a memory containing a plurality of network profiles, in particular wherein the server is a cloud-server.

The connection may be established via the internet, an intranet or a LAN. The network profiles are stored on the server in a database, for example. The version of network profiles stored in memory preferably correspond to the current real-life network at the specific location and/or of the specific operator.

By creating network profiles corresponding to a real-life network environment of a specific operator at a specific geographic location, it is possible to recreate the real-life network environment that a device under test should be tested in using the network simulator. Thus, the device under test can be tested in a laboratory under the same conditions, i.e. in a highly similar network environment, than in various locations around the globe without the need to travel. For the device under test, the conditions in the laboratory are therefore the same as when the device under test had been brought into the network environment at the specific geographic location. Thus, testing costs and efforts can be reduced drastically.

Further, this way the usage of out of date network profiles is prevented.

The regular intervals may be every hour, every week or every month. Prompting the sever ad-hoc may, for example, be initiated by a user of the test device.

In an embodiment, the network profile comprises a temporal course of the network configurations and/or of the environmental factor corresponding to the change of the real network environment when changing the specific geographic location. This way, tests that originally necessitate movement of the device under test over large distances may be performed in the laboratory.

The network profiles may be provided for different network operators and different geographic locations, e.g. different countries, cities, locations. Thus, the geographic location and/or the operator that the device under test shall be tested in may be chosen directly at the test device.

The control unit may have a network communication module for communicating with server.

In another embodiment, the control unit or the network simulator is configured to identify changes between different versions of the network profile, in particular between the version used to create the network test environment and the current version. In doing so, it can be decided easily whether or not to re-test a device under test when a change has occurred.

For automatic testing, the test device may be adapted to run different test scenarios with different network profiles, in particular roaming tests.

Usage of out of date network profiles may also be prevented by configuring the server to notify the test device about a change to at least one of the network profiles.

The number of notification may be reduced by reselecting a set of properties, wherein a change in the selected set of properties triggers a notification.

For example, the test device or server notifies the user upon network profile changes in specific preselected countries and/or specific preselected combinations of country and operator.

Further, a method for performing tests on a device under test according to claim 8 is provided.

The device under test may then be connected to the network test environment and tests may be performed.

The updates then reflect the changes in the real-life network at the specific location and/or of the specific operator. This way, it is ensured that only the current network profile is used.

For example, the at least one measurement value may be recorded with a User Equipment (UE), like a Smartphone, or via network monitoring equipment (e.g. using R&S Romes).

In order to keep the network profiles up to date and to recognize changes in the network profiles, the at least one measurement value of the real-life network may be recorded at regular intervals and/or ad-hoc and the network profile may be extracted at the regular intervals and/or ad-hoc

The measurement values are recorded ad-hoc, for example, by request of a user and/or as soon as a change of the real-life network environment is noticed in other ways, e.g. a change in the network configuration of the operator.

In another embodiment, the server notifies the test device about a preselected set of changes.

Ad-hoc prompting may be requested by a user.

In a variant, measurement values of a real-life network are recorded while changing the geographic location, and a network profile is extracted from the recorded measurement values, comprising a temporal course of the network configurations and/or of the at least one environmental factor corresponding to the change of the real network environment when changing the specific geographic location. This allows for mimicking the movement of the device under test.

To simplify testing further, a plurality of network profiles for different operators and/or different geographic locations may be determined.

In another embodiment, similarities between network profiles of different geographic locations, especially countries, and/or similarities of different combinations of geographic location and operator are determined. This way, further tests for similar network environments become unnecessary.

Further features and advantages of the invention will be apparent from the following description and the attached drawings to which reference is made. In the drawings:
- Figure 1 shows schematically a test infrastructure according to the invention with a test system according to the invention and a test device according to the invention,
- Figure 2 shows an illustration of the creation of network profiles for the test infrastructure according to Figure 1, and
- Figure 3 shows a flowchart of the method according to the invention.

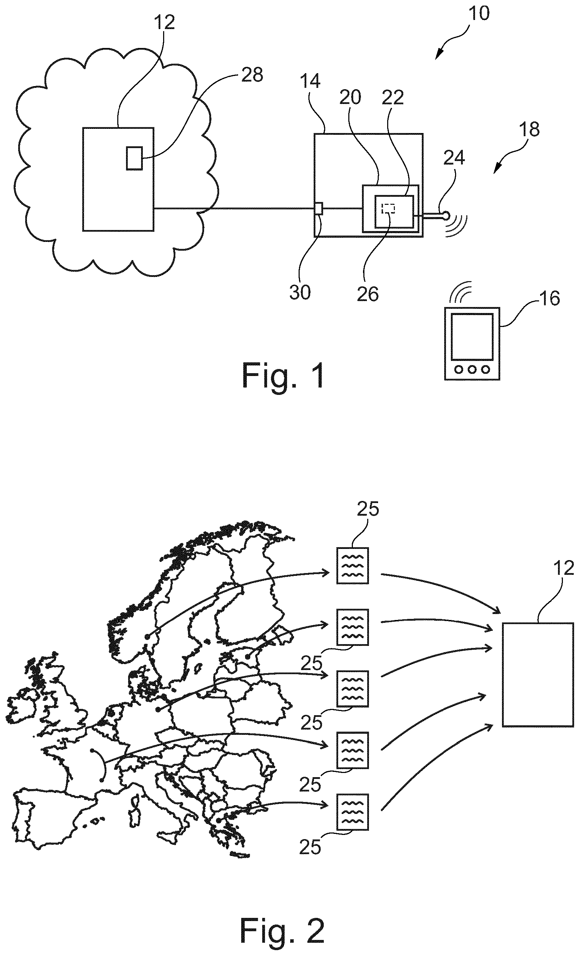

Figure 1 shows a test infrastructure 10 comprising a server 12 and a test device 14.

Further, the test infrastructure 10 may include a device under test 16, for example a mobile network device (user equipment - UE), like a smartphone or a tablet. Of course, the device under test 16 may be a sensor or an embedded device for the internet of things (loT).

The test device 14 and the device under test 16 may be seen as a test system 18.

The test device 14 comprises a network simulator 20, a control unit 22 and an antenna 24.

The network simulator 20 may be provided as a dedicated hardware or as part of the control unit 22 of the test device 14.

The network simulator 20 is configured to control the antenna 24 to create a wireless network environment for testing purposes, called network test environment within this disclosure.

The device under test 16 may connect to the network test environment created by the test device 14 so that tests can be performed on the device under test 16.

The network test environment has various properties, in particular network configurations and environmental factors.

The network configurations may include technology settings (like use of LTE, GSM or the like), protocol settings that define the use of a protocol and encryption settings defining the encryption used.

Environmental factors may include physical characteristics of a location that have an influence on the wireless network, like the density of base stations or the presence of geographical features, like hills or mountains or man-made buildings like houses or bridges. These properties of a network environment characterize the network environment and its behavior and are summarized as a "network profile" 25 in this disclosure.

The network profiles 25 are used by the network simulator 20 to create a network test environment with desired characteristics and behavior.

For this purpose, the network simulator 20 or the control unit 22 has access to a variety of network profiles 25.

This could be done by providing a memory 26 in the network simulator 20 or the control unit 22 in which network profiles 25 are stored. The network profile 25 may be stored in a database.

The memory is shown with dash lines in Figure 1.

In the embodiment of Figure 1, the network profiles 25 are stored on the server 12, more precisely a memory 28 of the server 12 in a database.

The server 12 is located "in the cloud", meaning that the server 12 is part of a server farm accessible via the internet.

Even though the server 12 is shown as a cloud server in Figure 1, the server 12 may also be located in an intranet or local area network in order to be accessible by the test device 14.

Of course, server 12 could also be distributed over several servers containing identical or parts of the database.

The test device 14 has a network communication module 30 for communicating with the server 12.

As illustrated in Figure 2, the network profiles 25 correspond to specific geographic locations and, in this case, also specific operators (mobile network operators - MNO) and are based on measurements of a real-life network environment at the specific geographic location and of the specific operator.

A network profile 25 may be created by recording measurement values at the desired specific geographic location, for example Oslo as seen in Figure 2.

The measurement values may be recorded using a user equipment like a smartphone, or using network monitoring equipment and software, for example R&S Romes.

The measurement values may include network protocol messages and physical layer measurement values and further information about signal strength, signal quality, echoes, information about the cell or base station, base station density or the like.

This way, data and information about the network environment of a specific operator in the geographic location, here Oslo, is acquired.

From the acquired measurement values, the network profile of this network environment can be extracted containing all information necessary in order to closely recreate the real-life network environment of Oslo by the network simulator 20.

Recording and simulating of a network environment is known and disclosed, for example, in WO 2008/045866 A2.

The extracted information may include the network configurations, in particular technology settings, protocol settings and encryption settings, as well as environmental factors like the base station density and/or the inferred presence of geographical features that causes echoes.

Thus, a network profile 25 for Oslo is obtained that allows reproducing the real-life network environment of a specific operator in Oslo at the time of the measurements in a laboratory using the network simulator 20 of the test device 14.

The measurements of a real-life network environment and extraction of the network profile may be repeated in Oslo for a different operator.

Further, as can be seen in Figure 2, network profiles at different geographic locations all over the world and for various operators are created.

In order to allow more sophisticated tests, a special type of network profile 25 may also be created.

This special type of network profile 25 allows simulating the movement of the device under test 16 along a predefined path.

To create this network profile 25, the measurement values of a real-life network of a specific operator are measured while changing the geographic location of the measurement equipment, e.g. by driving from one city to another (in Figure 2 from Paris to Lyon) while measuring.

As explained above, from the measurement values, a network profile can be extracted. However, in this case the network profile 25 does not contain information about a static network but a network environment that changes over time corresponding to the change of location. This network profile 25 then comprises a temporal course of the network configurations and environmental factors.

The information about the geographic location of the measurement and the operator of the measured real-life network and/or the path or route driven during the measurement is stored together with the corresponding network profile 25 and link to it.

Thus, a drive from Paris to Lyon may be simulated in the laboratory.

Having acquired different network profiles 25, all of the different network profiles 25 are stored in a database in the memory 28 of the server 12.

This database on the server 12 may be accessed by the test device 14.

The database of network profiles 25 on the server 12 thus contains network profiles 25 of real-life network environments all over the world.

In order to simplify testing, similarities between network profiles 25 of different geographic locations, especially countries, and/or similarities of different combinations of geographic locations and operators can be determined.

This way, a test performed with one network profile 25 may also be relevant for similar network profiles 25 so that testing with similar network profile 25 may not be necessary anymore.

However, real-life network environments change from time to time due to changes made by the operator or changed environmental factors. Therefore, recording of measurement values of the real-life networks and extraction of the corresponding network profile 25 is repeated in regular intervals, e.g. hourly, monthly or weekly intervals so that the database on the server 12 can be kept up to date. The recording of measurement values may also be repeated ad-hoc, for example by request of a user or as soon as a change of the real-life network environment is noticed, e.g. a change in the network configuration of the operator.

In order to prevent that out of date network profiles 25 are used for testing, the server 12 is configured to notify the test device 14 if a change to a network profile 25 has occurred because of a new measurement of the real-life network environment.

It can be selected on the test device 14 for which changes a notification shall occur, for example if network profiles 25 of specific countries or a specific combination of a country and operator have changed.

The test device 14 may then acquire or download the latest network profile 25 for a specific geographic location or operator.

In addition or alternatively, the test device 14 may prompt, i.e. contact the server 12 in regular intervals (e.g. every hour, every week or every month) and/or ad-hoc, e.g. by a user request, to check for a updated or more current version of the network profiles 25 on the server 12 in comparison with the network profiles 25 stored in the memory 26 of the test device 14.

The test device 14 may also identify changes between the different versions of the network profiles 25, i.e. between an outdated version and the current version of the network profile 25, in order to point out the changes that have occurred.

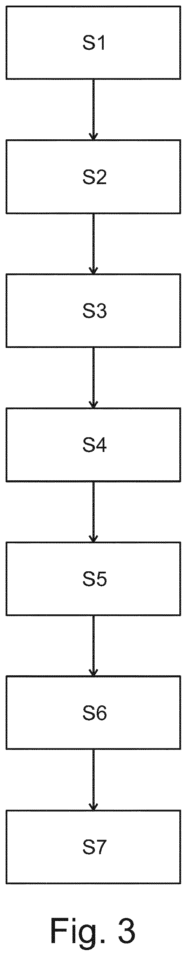

Figure 3 shows a method for testing the device under test 16 using the test infrastructure 10. In a first step (S1) the measurement values of a real-life network environment, in which the device under test 16 should be tested in, are taken. In step S2, the network profile 25 of this specific real-life network is extracted, and in step S3, it is stored on the server 12 together with information about the operator and the specific geographic location.

These steps S1 - S3 are usually performed independently before planning a measurement of the device under test 16.

However, these steps can also be performed on demand if no network profile 25 or no current network profile 25 of the desired geographic location and operator of a network environment is available in the database of the server 12.

The extracted network profile 25 is then provided to the test device 14, e.g. by downloading the desired network profile 25 to the memory 26 of the test device 14 (step S4).

The network simulator 20 of the test device 14 then uses the network profile 25 to create a network test environment that corresponds to the real-life network of the specific operator and at the specific geographic location (step S5).

In the next step S6, the device under test 16 is then connected to the created network test environment.

For the device under test 16, there is no difference between the network test environment and the actual real-life network environment so that the device under test 16 behaves like if it were connected to the real-life network environment of the specific operator at the specific geographic location.

In the next step S7, the desired tests may be performed with the device under test 16, e.g. to test the behavior in specific situations.

For example, the test device 14 is configured to run test scenarios to test the behavior of the device under test 16.

By testing the device under test 16 in different network test environments based on different network profiles 25 it is possible to test the device under test 16 in conditions closely resembling real-life network environments all over the world without actually travelling to these geographic locations.

## Claims

1. Test device for performing tests on a device under test (16), in particular a mobile network device, comprising a network simulator (20) being adapted to create a network test environment for the device under test (16),
wherein the network test environment has a network profile (25) comprising network configurations and comprising at least one environmental factor, in particular base station density and/or presence of at least one geographic feature, wherein the network configurations include technology settings, protocol settings and encryption settings,
wherein the test device (14) or the network simulator (20) comprises a control unit (22) having access to a plurality of network profiles (25), wherein the network profiles (25) are stored on a server (12) accessible by the control unit (22) or the network simulator (20),
wherein the network profile (25) is based on a measurement of a real-life network environment at a specific geographic location and/or of a specific operator,
wherein the network simulator (20) is adapted to create the network test environment corresponding to the real-life network environment at the specific geographic location and/or of the specific operator, and
wherein the control unit (22) or the network simulator (20) is configured to prompt the server (12) for a current version of the network profile (25) in regular intervals and/or ad-hoc.

2. Test device according to claim 1, wherein the network profile (25) comprises a temporal course of the network configurations and/or of the environmental factor corresponding to the change of the real network environment when changing the specific geographic location.

3. Test device according to claim 1 or 2, wherein the control unit (22) or the network simulator (20) is configured to identify changes between different versions of the network profile (25), in particular between the version used to create the network test environment and the current version.

4. Test device according to any one of the preceding claims, wherein the test device (14) is adapted to run different test scenarios with different network profiles (25), in particular roaming tests.

5. Test system with a test device (14) according to any one of the preceding claims and a device under test (16).

6. Test infrastructure comprising a test device (14) according to any one of claims 1 to 4 or a test system (18) according to claim 5, further comprising a server (12) connected to the test device (14), wherein the server (12) has a memory (28) containing a plurality of network profiles (25), in particular wherein the server (12) is a cloud-server.

7. Test infrastructure according to claim 6, wherein the server (12) is configured to notify the test device (14) about a change to at least one of the network profiles (25).

8. Method for performing tests on a device under test (16), in particular a mobile network device, by means of a test device (14), the method comprising the following steps:
a) recording at least one measurement value, in particular network protocol message and/or physical layer measurement value, measured in a real-life network of a specific operator and/or at a specific geographic location,
b) extracting a network profile (25) comprising network configurations and at least one environmental factor, in particular base station density and/or presence of at least one geographic feature, from the at least one measurement value recorded, wherein the network configurations include technology settings, protocol settings and encryption settings,
c) storing the specific operator and/or the specific location linked to the network profile (25),
d) providing the network profile (25) to the test device (14), in particular according to anyone of the claims 1 to 4, a test system (18), in particular according to claim 5, or a test infrastructure (10), in particular according to claim 6 or 7, and
e) creating a network test environment using a network simulator (20) of the test device (14), the network test environment corresponding to the real-life network of the specific operator and/or at the specific geographic location,
wherein a control unit (22) of the test device (14) or the network simulator (20), which has access to a plurality of network profiles (25) stored on a server (12) accessible by the control unit (22) or the network simulator (20), prompts for current versions of the network profile (25) stored in the server (12) in regular intervals and/or ad-hoc; and/or wherein the server (12) notifies the test device (14) about changes to the network profile (25), and
wherein the network profile (25) of the server (12) is updated in regular intervals and/or ad-hoc.

9. Method according to claim 8, wherein the at least one measurement value of the real-life network is recorded at regular intervals and/or ad-hoc and the network profile (25) is extracted at the regular intervals and/or ad-hoc.

10. Method according to claim 8 or 9, wherein the server (12) notifies the test device (14) about a preselected set of changes.

11. Method according to any one of the claims 8 to 10, wherein measurement values of a real-life network are recorded while changing the geographic location, and a network profile (25) is extracted from the recorded measurement values, comprising a temporal course of the network configurations and/or of the at least one environmental factor corresponding to the change of the real network environment when changing the specific geographic location.

12. Method according to any one of the claims 8 to 11, wherein a plurality of network profiles (25) for different operators and/or different geographic locations are determined.

13. Method according to claim 12, wherein similarities between network profiles (25) of different geographic locations, especially countries, and/or similarities of different combinations of geographic location and operator are determined.

## Patentansprüche

1. Testvorrichtung zur Durchführung von Tests an einer zu testenden Vorrichtung (16), insbesondere einer mobilen Netzwerkvorrichtung, mit einem Netzwerksimulator (20), der angepasst ist, um eine Netzwerktestumgebung für die zu testende Vorrichtung (16) zu erzeugen,
wobei die Netzwerktestumgebung ein Netzwerkprofil (25) aufweist, das Netzwerkkonfigurationen und zumindest einen Umgebungsfaktor, insbesondere die Basisstationsdichte und/oder ein Vorhandensein zumindest eines geografischen Merkmals umfasst, wobei die Netzwerkkonfigurationen Technologieeinstellungen, Protokolleinstellungen und Verschlüsselungseinstellungen enthalten,
wobei die Testvorrichtung (14) oder der Netzwerksimulator (20) eine Steuereinheit (22) umfassen, die Zugriff auf eine Mehrzahl von Netzwerkprofilen (25) hat, wobei die Netzwerkprofile (25) auf einem Server (12) gespeichert sind, auf den die Steuereinheit (22) oder der Netzwerksimulator (20) Zugriff haben,
wobei das Netzwerkprofil (25) auf einer Messung einer realen Netzwerkumgebung an einem spezifischen geografischen Ort und/oder eines spezifischen Bedieners basiert,
wobei der Netzwerksimulator (20) angepasst ist, um die Netzwerktestumgebung entsprechend der realen Netzwerkumgebung an dem spezifischen geografischen Ort und/oder des spezifischen Bedieners zu erzeugen, und
wobei die Steuereinheit (22) oder der Netzwerksimulator (20) dazu konfiguriert ist, den Server (12) in regelmäßigen Zeitintervallen und/oder ad-hoc zu einer aktuellen Version des Netzwerkprofils (25) aufzufordern.

2. Testvorrichtung nach Anspruch 1, wobei das Netzwerkprofil (25) einen zeitlichen Verlauf der Netzwerkkonfigurationen und/oder des Umgebungsfaktors umfasst, der der Änderung der realen Netzwerkumgebung bei Änderung des spezifischen geografischen Orts entspricht.

3. Testvorrichtung nach Anspruch 1 oder 2, wobei die Steuereinheit (22) oder der Netzwerksimulator (20) dazu konfiguriert ist, Änderungen zwischen verschiedenen Versionen des Netzwerkprofils (25), insbesondere zwischen der Version, die zur Erzeugung der Netzwerktestumgebung verwendet wurde, und der aktuellen Version zu erkennen.

4. Testvorrichtung nach einem der vorstehenden Ansprüche, wobei die Testvorrichtung (14) angepasst ist, um verschiedene Testszenarien mit verschiedenen Netzwerkprofilen (25), insbesondere Roaming-Tests, durchzuführen.

5. Testsystem mit einer Testvorrichtung (14) nach einem der vorstehenden Ansprüche und einer zu testenden Vorrichtung (16) .

6. Testinfrastruktur mit einer Testvorrichtung (14) nach einem der Ansprüche 1 bis 4 oder einem Testsystem (18) nach Anspruch 5, ferner umfassend einen Server (12), der mit der Testvorrichtung (14) verbunden ist, wobei der Server (12) einen Speicher (28) mit einer Mehrzahl von Netzwerkprofilen (25) aufweist, insbesondere wobei der Server (12) ein Cloud-Server ist.

7. Testinfrastruktur nach Anspruch 6, wobei der Server (12) dazu konfiguriert ist, die Testvorrichtung (14) über eine Änderung an zumindest einem der Netzwerkprofile (25) zu benachrichtigen.

8. Verfahren zur Durchführung von Tests mittels einer Testvorrichtung (14) an einer zu testenden Vorrichtung (16), insbesondere einer mobilen Netzwerkvorrichtung, wobei das Verfahren die folgenden Schritte umfasst:
a) Aufzeichnen zumindest eines Messwerts, insbesondere einer Netzwerkprotokollnachricht und/oder eines Messwerts der physischen Schicht, der in einem realen Netzwerk eines spezifischen Bedieners und/oder an einem spezifischen geografischen Ort gemessen wurde,
b) Extrahieren eines Netzwerkprofils (25), das Netzwerkkonfigurationen und zumindest einen Umgebungsfaktor, insbesondere die Basisstationsdichte und/oder ein Vorhandensein zumindest eines geografischen Merkmals umfasst, aus dem zumindest einen aufzeichneten Messwert, wobei die Netzwerkkonfigurationen Technologieeinstellungen, Protokolleinstellungen und Verschlüsselungseinstellungen enthalten,
c) Speichern des spezifischen Bedieners und/oder des spezifischen Orts, der mit dem Netzwerkprofil (25) verbunden ist,
d) Bereitstellen des Netzwerkprofils (25) an die Testvorrichtung (14), insbesondere nach einem der Ansprüche 1 bis 4, an ein Testsystem (18), insbesondere nach Anspruch 5, oder an eine Testinfrastruktur (10), insbesondere nach Anspruch 6 oder 7, und
e) Erzeugen einer Netzwerktestumgebung unter Verwendung eines Netzwerksimulators (20) der Testvorrichtung (14), wobei die Netzwerktestumgebung dem realen Netzwerk des spezifischen Bedieners und/oder dem spezifischen geografischen Ort entspricht,
wobei eine Steuereinheit (22) der Testvorrichtung (14) oder des Netzwerksimulators (20), die Zugriff auf eine Mehrzahl von Netzwerkprofilen (25) hat, die auf einem Server (12) gespeichert sind, auf den die Steuereinheit (22) oder der Netzwerksimulator (20) Zugriff haben, in regelmäßigen Zeitintervallen und/oder ad-hoc zu einer aktuellen Version des auf dem Server (12) gespeicherten Netzwerkprofils (25) auffordert; und/oder wobei der Server (12) die Testvorrichtung (14) über Änderungen an dem Netzwerkprofile (25) benachrichtigt, und
wobei das Netzwerkprofil (25) des Servers (12) in regelmäßigen Zeitintervallen und/oder ad-hoc aktualisiert wird.

9. Verfahren nach Anspruch 8, wobei der zumindest eine Messwert des realen Netzwerks in regelmäßigen Zeitintervallen und/oder ad-hoc aufgezeichnet wird und das Netzwerkprofil (25) in den regelmäßigen Zeitintervallen und/oder ad-hoc extrahiert wird.

10. Verfahren nach Anspruch 8 oder 9, wobei der Server (12) die Testvorrichtung (14) über einen vorgewählten Satz Änderungen benachrichtigt.

11. Verfahren nach einem der Ansprüche 8 bis 10, wobei die Messwerte eines realen Netzwerks bei Änderung des geografischen Orts aufgezeichnet werden, und ein Netzwerkprofil (25) aus den aufgezeichneten Messwerten extrahiert wird, das einen zeitlichen Verlauf der Netzwerkkonfigurationen und/oder des zumindest einen Umgebungsfaktors entsprechend der Änderung der realen Netzwerkumgebung bei Änderung des spezifischen geografischen Orts umfasst.

12. Verfahren nach einem der Ansprüche 8 bis 11, wobei eine Mehrzahl von Netzwerkprofilen (25) für verschiedene Bediener und/oder verschiedene geografische Orte bestimmt werden.

13. Verfahren nach Anspruch 12, wobei Ähnlichkeiten zwischen Netzwerkprofilen (25) verschiedener geografischer Orte, insbesondere Länder, und/oder Ähnlichkeiten verschiedener Kombinationen von geografischem Ort und Bediener bestimmt werden.

## Revendications

1. Dispositif de test pour réaliser des tests sur un dispositif sous test (16), en particulier un dispositif de réseau mobile, comprenant un simulateur de réseau (20) adapté à créer un environnement de test de réseau pour le dispositif sous test (16),
dans lequel l'environnement de test de réseau présente un profil de réseau (25) comprenant des configurations de réseau et comprenant au moins un facteur environnemental, en particulier une densité de la station de base et/ou la présence d'au moins une caractéristique géographique, dans lequel les configurations de réseau comportent des paramètres de technologie, des paramètres de protocole et des paramètres de chiffrement,
dans lequel le dispositif de test (14) ou le simulateur de réseau (20) comprend une unité de commande (22) ayant accès à une pluralité de profils de réseau (25), dans lequel les profils de réseau (25) sont stockés sur un serveur (12) accessible par l'unité de commande (22) ou le simulateur de réseau (20),
dans lequel le profil de réseau (25) est basé sur une mesure d'un environnement de réseau dans la réalité au niveau d'un emplacement géographique spécifique et/ou d'un opérateur spécifique
dans lequel le simulateur de réseau (20) est adapté à créer l'environnement de test de réseau correspondant à l'environnement de réseau dans la réalité au niveau de l'emplacement géographique spécifique et/ou de l'opérateur spécifique, et
dans lequel l'unité de commande (22) ou le simulateur de réseau (20) est configuré pour inviter le serveur (12) à prendre une version actuelle du profil de réseau (25) par intervalles réguliers et/ou de façon ad-hoc.

2. Dispositif de test selon la revendication 1, dans lequel le profil de réseau (25) comprend une évolution temporelle des configurations de réseau et/ou du facteur environnemental correspondant au changement de l'environnement de réseau dans la réalité lors d'un changement de l'emplacement géographique spécifique.

3. Dispositif de test selon la revendication 1 ou 2, dans lequel l'unité de commande (22) ou le simulateur de réseau (20) est configuré(e) pour identifier des changements entre différentes versions du profil de réseau (25), en particulier entre la version utilisée pour créer l'environnement de test de réseau et la version actuelle.

4. Dispositif de test selon l'une quelconque des revendications précédentes, dans lequel le dispositif de test (14) est adapté à exécuter différents scénarios de test avec différents profils de réseau (25), en particulier des tests d'itinérance.

5. Système de test avec un dispositif de test (14) selon l'une quelconque des revendications précédentes et un dispositif sous test (16).

6. Infrastructure de test comprenant un dispositif de test (14) selon l'une quelconque des revendications 1 à 4 ou un système de test (18) selon la revendication 5, comprenant en outre un serveur (12) connecté au dispositif de test (14), dans laquelle le serveur (12) présente une mémoire (28) contenant une pluralité de profils de réseau (25), en particulier dans lequel le serveur (12) est un serveur en nuage.

7. Infrastructure de test selon la revendication 6, dans laquelle le serveur (12) est configuré pour notifier au dispositif de test (14) un changement apporté à au moins un des profils de réseau (25).

8. Procédé pour effectuer des tests sur un dispositif sous test (16), en particulier un dispositif de réseau mobile, au moyen d'un dispositif de test (14), le procédé comprenant les étapes suivantes :
a) l'enregistrement d'au moins une valeur de mesure, en particulier d'un message de protocole de réseau et/ou d'une valeur de mesure de couche physique, mesurée dans un réseau dans la réalité d'un opérateur spécifique et/ou au niveau d'un emplacement géographique spécifique,
b) l'extraction d'un profil de réseau (25) comprenant des configurations de réseau et au moins un facteur environnemental, en particulier une densité de la station de base et/ou la présence d'au moins une caractéristique géographique, de la au moins une valeur de mesure enregistrée, dans lequel les configurations de réseau comportent des paramètres de technologie, des paramètres de protocole et des paramètres de chiffrement,
c) le stockage de l'opérateur spécifique et/ou de l'emplacement spécifique lié au profil de réseau (25),
d) la fourniture du profil de réseau (25) au dispositif de test (14), en particulier selon l'une quelconque des revendications 1 à 4, à un système de test (18), en particulier selon la revendication 5, ou à une infrastructure de test (10), en particulier selon la revendication 6 ou 7, et
e) la création d'un environnement de test de réseau au moyen d'un simulateur de réseau (20) du dispositif de test (14), l'environnement de test de réseau correspondant au réseau dans la réalité de l'opérateur spécifique et/ou au niveau de l'emplacement géographique,
dans lequel une unité de commande (22) du dispositif de test (14) ou du simulateur de réseau (20), qui a accès à une pluralité de profils de réseau (25) stockés sur un serveur (12) accessible par l'unité de commande (22) ou le simulateur de réseau (20), invite à prendre des versions actuelles du profil de réseau (25) stockées dans le serveur (12) par intervalles réguliers et/ou de façon ad-hoc ; et/ou dans lequel le serveur (12) notifie au dispositif de test (14) les changements apportés au profil de réseau (25), et
dans lequel le profil de réseau (25) du serveur (12) est mis à jour par intervalles réguliers et/ou de façon ad-hoc.

9. Procédé selon la revendication 8, dans lequel la au moins une valeur de mesure du réseau dans la réalité est enregistrée par intervalles réguliers et/ou de façon ad-hoc et le réseau de profil (25) est extrait par intervalles réguliers et/ou de façon ad-hoc.

10. Procédé selon la revendication 8 ou 9, dans lequel le serveur (12) notifie le dispositif de test (14) concernant un ensemble présélectionné de changements.

11. Procédé selon l'une quelconque des revendications 8 à 10, dans lequel des valeurs de mesure d'un réseau dans la réalité sont enregistrées tout en changeant l'emplacement géographique, et un profil de réseau (25) est extrait des valeurs de mesure enregistrées, comprenant une évolution temporelle des configurations de réseau et/ou du au moins un facteur environnemental correspondant au changement de l'environnement de réseau dans la réalité lors d'un changement de l'emplacement géographique spécifique.

12. Procédé selon l'une quelconque des revendications 8 à 11, dans lequel une pluralité de profils de réseau (25) pour différents opérateurs et/ou différents emplacements géographiques sont déterminés.

13. Procédé selon la revendication 12, dans lequel des similarités entre des profils de réseau (25) de différents emplacements géographiques, en particulier des pays, et/ou des similarités de différentes combinaisons d'emplacement géographique et d'opérateur sont déterminées.
